Europäisches Patentamt

European Patent Office

Office européen des brevets

(19)

(11) **EP 0 410 078 B1**

(12) **EUROPÄISCHE PATENTSCHRIFT**

(45) Veröffentlichungstag und Bekanntmachung des Hinweises auf die Patenterteilung:
**24.07.1996  Patentblatt 1996/30**

(51) Int Cl.⁶: **G10K 11/16**

(21) Anmeldenummer: **90107156.3**

(22) Anmeldetag: **14.04.1990**

(54) **Schalldämpfung für die Ölwanne eines Kraftfahrzeuges und Verfahren zu ihrer Anbringung**

Sound absorption for the oil sump of a motor vehicle and method for its mounting

Atténuation du son du carter d'huile d'une automobile et son procédé de montage

(84) Benannte Vertragsstaaten:
**AT DE ES FR GB IT SE**

(30) Priorität: **24.07.1989 IE 239489**

(43) Veröffentlichungstag der Anmeldung:
**30.01.1991  Patentblatt 1991/05**

(73) Patentinhaber: **H.P. Chemie Pelzer Research & Development Ltd.**
**Tramore, County Waterford (IE)**

(72) Erfinder: **Casey, John**
**Tramore, County Waterford (IE)**

(74) Vertreter:
**Jönsson, Hans-Peter, Dr.Dipl.-Chem. et al**
**Patentanwälte**
**von Kreisler Selting Werner**
**Postfach 10 22 41**
**50462 Köln (DE)**

(56) Entgegenhaltungen:
EP-A- 0 100 147          DE-B- 1 027 896
FR-A- 2 398 360          GB-A- 2 094 948
US-A- 4 223 073

• PATENT ABSTRACTS OF JAPAN, Band 11, Nr. 168 (M-594); & JP-A-62 000 629

**Beschreibung**

Gegenstand der Erfindung ist eine Schalldämpfung für Luft- oder Körperschall, der von der ölwanne eines Kraftfahrzeuges ausgeht, mit Hilfe einer Auflage, die aus einer viskoelastischen Schicht und einer metallischen Deckschicht besteht, wobei die viskoelastische Schicht zwischen die ölwanne und die Deckschicht eingebunden ist.

Die Ölwanne eines Motors eines Kraftfahrzeuges, die gewöhnlich aus einem Aluminium-Gußteil besteht und mindestens an ihrer Außenseite zwecks erhöhter Wärmeabfuhr Oberflächenvergrößerungen in Form von Rippen, Noppen oder dergleichen aufweist, leitet Körperschall und strahlt Luftschall ab. Der Schall entsteht in den antreibenden Teilen des Motors und liegt meist oberhalb von 500 Hz.

Aus der DE - AS 1 201 083 ist es bekannt, die Körperschallschwingungen eines Bauteiles mit einem mehrschichtigen Belag zu bedämpfen, der aus einem viskoelastischen Stoff, insbesondere weichgemachtem Kunststoff und einem Abdeckblech besteht. Dabei wird das Abdeckblech zuerst der räumlichen Form des Bauteiles angepaßt, danach die Zwischenschicht mit dem Abdeckblech und beide mit dem Bauteil verbunden. Diese, das ganze Bauteil bedeckende Art der Schalldämpfung ist nach Gewicht, Arbeitsaufwand, Materialaufwand und Raumnutzung sehr aufwendig. Zudem eignet sie sich nicht zur Bedämpfung von Schallschwingungen, die in der Ölwanne eines Kraftfahrzeuges verlaufen oder von dort abgestrahlt werden weil die ölwanne unter anderem die Funktion hat, das in ihr enthaltene Öl zu kühlen. Zu diesem Zweck ist sie an ihrer Außenseite mit entsprechend bemessenen und/oder geformten Oberflächenvergrößerungen versehen. Wollte man die vorbekannte Form der Schalldämpfung auf die ölwanne anwenden, so hätte dies zur Folge, daß die aufgebrachten Schichten eine erhebliche Minderung der Wärmeabfuhr verursachen würden. Dem könnte nur durch eine Vergrößerung der wärmeabführenden Fläche mit einem entsprechenden Mehraufwand an Gewicht und Material oder mit einer zusätzlichen Ölkühlung begegnet werden, die dann ebenfalls leistungsfähiger bemessen werden müßte und so ebenfalls zu einem erheblichen Mehraufwand führen würde.

Aus Dokument PATENT ABSTRACTS OF JAPAN, Band 11, Nr. 168 (M-594) & JP-A-62 000 629 ist eine Schalldämpfungsabdeckung für eine Ölwanne bekannt.

Der vorliegenden Erfindung liegt die Aufgabe zugrunde, eine die Schalldämpfung der ölwanne eines Kraftfahrzeuges anzugeben, die die Wärmeabfuhr über die ölwanne nicht behindert und nach Aufwand und Wirtschaftlichkeit vertretbar ist.

Nach der Erfindung wird diese Aufgabe dadurch gelöst, daß die Auflage der eingangs beschriebenen Art auf der Außenseite der Ölwanne angebracht und auf die Bereiche der Außenseite beschränkt ist in denen die höchsten Amplituden der Schallwellen liegen.

Es hat sich gezeigt, daß diese Bereiche, die durch Schallmessung mit Mikrofonen oder durch Modulanalyse gefunden werden können, nach Zahl und Abmessung gering sind. Somit ist der räumliche und und materielle Aufwand für die Bedämpfung des Schalles gering und für die herkömmliche Wärmeabfuhr über die Oberfläche der Ölwanne bleibt genügend Platz.

Da es im Betrieb aber weiterhin zu einer Erwärmung des viskoelastischen Materials kommt, wird für dieses vorzugsweise ein spritzbares Material gewählt dessen Glasübergangstemperatur zwischen 20 und 50 Grad C einstellbar ist.

In Weiterbildung der Erfindung hat sich ein Zweikomponentenmaterial bewährt dessen erste Komponente aus

| 20 Teilen | zweifunktionalen Polyols mit einem Molekulargewicht von 2000 |
| 5 Teilen | Polyol, das zum Zeitpunkt der Anmeldung unter dem Handelsnamen cp 5021 erhältlich ist, |
| 75 Teilen | eines vierfunktionalen Polyols, |
| 35-40 Teilen | Micro-Glimmer, |
| 12 Teilen | eines als Wasserabsorber dienenden Molekularsiebes |
| 4-5 Teilen | eines Thixotropiermittels und |
| 0,5-1 Teilen | eines Reaktionsbeschleunigers, wie er zum Zeitpunkt der Anmeldung unter dem Handelsnamen Dabco 33 LU erhältlich ist, und |

dessen zweite Komponente aus einem als Härter dienenden Rohisocyanat, zum Beispiel Methyol-Diisocyanat besteht.

Die Komponenten des vorstehend angegebenen Materials werden mit Vorteil im Verhältnis zwischen 2,5 und 4 Teilen der ersten Komponente zu 1 Teil der zweiten Komponente gemischt.

Mechanisch kann die erfindungsgemäße Schalldämpfung an der Ölwanne dadurch gehalten werden, daß die viskoelastische Schicht als Kleber gegenüber der Ölwanne und der Deckschicht wirkt.

Mit besonderm Vorteil besteht die Deckschicht aus Stahl oder Aluminium.

Es hat sich ergeben, daß die Schichtstärken der mittleren Wandstärke der Ölwanne, der viskoelastischen Schicht und der Deckschicht im Verhältnis von etwa 1:x:y zu den besten und breitbandigsten Dämpfungsergebnissen führen.

$$(x = 1 - 2,5 \qquad y = 0,3 - 0,5)$$

Weiterer Gegenstand der Erfindung ist ein Verfahren zum Aufbringen der viskoelastischen Schicht als Schalldämpfung nach Anspruch 1 oder einem der folgenden bei dem erfindungsgemäß die viskoelastische Schicht auf die Ölwanne und die, vorzugsweise vorgeformte Deckschicht auf die viskoelastische Schicht aufgebracht wird und die Aushärtzeit der beiden Komponenten der viskoelastischen Schicht zwischen 5 und 10 Minuten eingestellt wir

Die Figuren zeigen in zum Teil schematischer Darstellung ein Ausführungsbweispiel einer Schalldämpfung nach der Lehre der Erfindung.

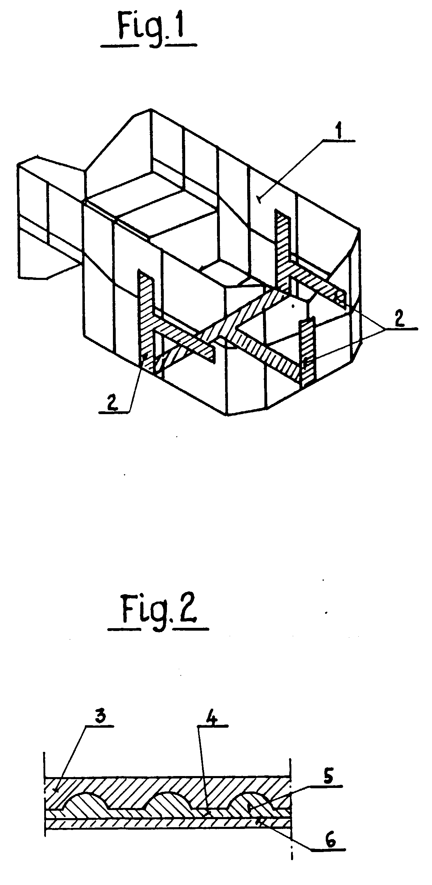

In Figur 1 ist eine Ölwanne 1 dargestellt auf deren Außenseite auf der schraffierten Teilfläche 2 eine Schalldämpfung nach der Erfindung aufgebracht ist. Figur 2 zeigt im Ausschnitt einen Schnitt durch die Ölwanne und die Schalldämpfung. Die Ölwanne 3 weist Rippen 4 auf die der verstärkten Wärmeabfuhr dienen. Die viskoelastische Schicht 5 ist zwischen der Ölwanne 3 und der Deckschicht 6 eingebunden.

**Patentansprüche**

1. Schalldämpfung für Luft- oder Körperschall, der von der Ölwanne (1) eines Kraftfahrzeuges ausgeht, mit Hilfe einer Auflage (5, 6), die aus einer viskoelastischen Schicht (5) und einer metallischen Deckschicht (6) besteht, wobei die viskoelastische Schicht zwischen die Ölwanne und die Deckschicht eingebunden ist, **dadurch gekennzeichnet**, daß die Auflage (5,6) auf der Außenseite der Ölwanne (1,3) angebracht und auf die Bereiche der Außenseite beschränkt ist, in denen die höchsten Amplituden der Schallwellen liegen.

2. Schalldämpfung nach Anspruch 1, **dadurch gekennzeichnet**, daß die viskoelastische Schicht (5) aus einem spritzbaren Material besteht dessen Glasübergangstemperatur zwischen 20 und 50 Grad C einstellbar ist.

3. Schalldämpfung nach Anspruch 2, **dadurch gekennzeichnet**, daß die viskoelastische Schicht (5) aus einem Zweikomponentenmaterial besteht dessen erste Komponente aus

| | |
|---|---|
| 20 Teilen | zweifunktionalen Polyols mit einem Molekulargewicht von 2000, |
| 5 Teilen | Polyol, das zum Zeitpunkt der Anmeldung unter dem Handelsnamen cp 5021 erhältlich ist, |
| 75 Teilen | eines vierfunktionalen Polyols, |
| 35-40 Teilen | Micro-Glimmer, |
| 12 Teilen | eines als Wasserabsorbers dienenden Molekularsiebes, |
| 4-5 Teilen | eines Thixotropiermittels und |
| 0,5-1 Teilen | eines Reaktionsbeschleunigers, wie er zum Zeitpunkt der Anmeldung unter dem Handelsnamen Dabco 33 LU erhältlich ist, und |

dessen zweite Komponente aus einem als Härter dienenden Rohisocyanat, zum Beispiel Methyol-Diisocyanat besteht.

4. Schalldämpfung nach Anspruch 3, **dadurch gekennzeichnet**, daß das Verhältnis der Komponenten zwischen 2,5 - 4 Teilen der ersten Komponente zu 1 Teil der zweiten Komponente besteht.

5. Schalldämpfung nach Ansruch 1 oder einem der folgenden, **dadurch gekennzeichnet**, daß die viskoelastische Schicht (5) als Kleber gegenüber der Ölwanne (3) und der Deckschicht (6) wirkt.

6. Schalldämpfung nach Anspruch 1 oder einem der folgenden, **dadurch gekennzeichnet**, daß die Deckschicht (6) aus einer metallischen Bandage, z. B. aus Stahl oder Aluminium besteht.

7. Schalldämpfung nach Anspruch 1 oder einem der folgenden, **dadurch gekennzeichnet**, daß die Schichtstärken der mittleren Wandstärke der Ölwanne (3), der viskoelastischen Schicht (5) und der Deckschicht (6) im Verhältnis 1:x:y stehen, wobei x zwischen 1 und 2,5 und y zwischen 0,3 und 0,5 liegt.

8. Verfahren zum Aufbringen der viskoelastischen Schicht als Schalldämpfung nach Anspruch 1 oder einem der folgenden, **dadurch gekennzeichnet**, daß die viskoelastische Schicht auf die Ölwanne und die, vorzugsweise vorgeformte Deckschicht auf die viskoelastische Schicht aufgebracht wird und die Aushärtezeit der beiden Komponenten der viskoelastischen Schicht zwischen 5 und 10 Minuten eingestellt wird.

**Claims**

1. A sound absorbing system for airborne or solid-borne sound emanating from the oil sump (1) of a motor vehicle using a coat (5, 6) consisting of a viscoelastic layer (5) and a metallic cover layer (6) wherein said viscoelastic layer is incorporated between said oil sump and said cover layer, characterized in that said coat (5, 6) is applied to the outside of said oil sump (1,3) and limited to those areas of the outside in which the highest amplitudes of the sound waves are located.

2. The sound absorbing system according to claim 1, characterized in that said viscoelastic layer (5) is made of an injectable material whose glass transition temperature is adjustable to between 20 and 50°C.

3. The sound absorbing system according to claim 2, characterized in that said viscoelastic layer (5) is made of a two-component material, the first component of which consists of

| 20 parts of | a difunctional polyol having a molecular weight of 2000; |
| 5 parts of | a polyol which is available at the time of this application under the trade name of cp 5021; |
| 75 parts of | a tetrafunctional polyol; |
| 35-40 parts of | micro-mica; |
| 12 parts of | a molecular sieve serving as a water absorber; |
| 4-5 parts of | a thixotropic agent; and |
| 0.5-1 parts of | a reaction promotor as available at the time of this application under the trade name of Dabco 33 LU, |

and the second component of which consists of a crude isocyanate serving as a curing agent, for example, methyol diisocyanate.

4. The sound absorbing system according to claim 3, characterized in that the proportion of the components is from 2.5 to 4 parts of the first component to 1 part of the second component.

5. The sound absorbing system according to claim 1 or one of the subsequent claims, characterized in that said viscoelastic layer (5) acts as an adhesive with respect to said oil sump (3) and said cover layer (6).

6. The sound absorbing system according to claim 1 or one of the subsequent claims, characterized in that said cover layer (6) consists of a metallic tie strip, e.g., of steel or aluminium.

7. The sound absorbing system according to claim 1 or one of the subsequent claims, characterized in that the layer thicknesses of the average wall thickness of the oil sump (3), of the viscoelastic layer (5), and the cover layer (6) are in a relation of 1:x:y where x is between 1 and 2.5, and y is between 0.3 and 0.5.

8. A method for applying a viscoelastic layer as a sound absorbing system according to claim 1 or one of the subsequent claims, characterized in that said viscoelastic layer is applied to said oil sump, and said cover layer, preferably being preformed, is applied to said viscoelastic layer, and the curing time of the two components of said viscoelastic layer is adjusted to between 5 and 10 minutes.

## Revendications

1. Système d'amortissement du bruit pour atténuer le bruit, transmis par l'air ou par une structure, qui émane du carter d'huile (1) d'un véhicule automobile, à l'aide d'un revêtement(5,6), qui est constitué par une couche viscoélastique (5) et par une couche de recouvrement métallique (6), la couche viscoélastique étant intégrée entre le carter d'huile et la couche de recouvrement, caractérisé en ce que le revêtement (5,6) est appliqué sur la face extérieure du carter d'huile (1,3) et est limité aux zones de la face extérieure, dans lesquelles se situent les amplitudes maximales des ondes sonores.

2. Système d'amortissement du bruit selon la revendication 1, caractérisé en ce que la couche viscoélastique (5) est réalisée en un matériau pouvant être projeté et dont la température de transition vitreuse est réglable entre 20 et 50 degrés C.

3. Système d'amortissement du bruit selon la revendication 2, caractérisé en ce que la couche viscoélastique (5) est réalisée en un matériau à deux constituants, dont le premier constituant est formé par

| 20 parties | d'un polyol bifonctionnel possédant un poids moléculaire de 2000, |
| 5 parties | d'un polyol, qui est disponible, au moment du dépôt de la demande, sous la désignation commerciale cp 5021, |
| 75 parties | d'un polyol quadrifonctionnel, |
| 35 à 40 parties | de micro-mica, |
| 12 parties | d'un tamis moléculaire utilisé comme absorbeur d'eau, |
| 4 à 5 parties | d'un agent thixotrope, et |
| 0,5 à 1 partie | d'un accélérateur de réaction, du type disponible, au moment du dépôt de la demande, sous la désignation commerciale Dabco 33 LU, et |

dont le second constituant est formé par un isocyanate brut utilisé comme durcisseur, par exemple du méthyol -diisocyanate.

4. Système d'amortissement du bruit selon la revendication 3, caractérisé en ce que le rapport des constituants est compris entre 2,5 à 4 parties du premier constituant pour 1 partie du second constituant.

5. Système d'amortissement du bruit selon la revendication 1 ou l'une des suivantes, caractérisé en ce que la couche viscoélastique (5) agit en tant que colle par rapport au carter d'huile (3) et à la couche de recouvrement (6).

6. Système d'amortissement du bruit selon la revendication 1 ou l'une des suivantes, caractérisé en ce que la couche de recouvrement (6) est constituée par un bandage métallique, par exemple en acier ou en aluminium.

7. Système d'amortissement du bruit selon la revendication 1 ou l'une des suivantes, caractérisé en ce que l'épaisseur moyenne de la paroi du carter d'huile (3), l'épaisseur de la couche viscoélastique (5) et l'épaisseur de la couche de recouvrement (6) sont dans le rapport 1:x:y, x étant compris entre 1 et 2,5 et y entre 0,3 et 0,5.

8. Procédé pour déposer la couche viscoélastique en tant que système d'amortissement du bruit selon la revendication 1 ou l'une des suivantes, caractérisé en ce qu'on dépose la couche viscoélastique sur le carter d'huile et la couche de recouvrement, de préférence préformée, sur la couche viscoélastique, et l'on règle le temps de durcissement des deux constituants de la couche viscoélastique entre 5 et 10 minutes.

## Fig.1

## Fig.2